# EUROPÄISCHE PATENTSCHRIFT

(11) **EP 3 620 545 B1**
(45) Veröffentlichungstag und Bekanntmachung des Hinweises auf die Patenterteilung: **09.06.2021**
(21) Anmeldenummer: 19194298.6
(22) Anmeldetag: 29.08.2019
(51) Int. Cl.: C23C 4/02, C23C 4/06, C23C 4/10, C23C 4/129, C23C 28/02, C23C 28/00, F16D 65/00, F16D 65/12, F16D 65/02, C23C 10/28

(54) **BREMSSCHEIBE UND VERFAHREN ZUM HERSTELLEN EINER BREMSSCHEIBE**
BRAKE DISC AND METHOD FOR PRODUCING SAME
DISQUE DE FREIN ET PROCÉDÉ DE FABRICATION D'UN DISQUE DE FREIN

(30) Priorität: 04.09.2018 DE 102018215042; 09.07.2019 DE 102019210088
(43) Veröffentlichungstag der Anmeldung: 11.03.2020
(73) Patentinhaber: Ford Global Technologies, LLC, Dearborn, MI 48126 (US)
(72) Erfinder: Rettig, Marc, 50823 Köln (DE); Grochowicz, Jaroslaw, 45357 Essen (DE); Grabiec, Tomasz Pawel, 51427 Bergisch Gladbach (DE); Verpoort, Clemens Maria, 40789 Monheim (DE); Wank, Andreas, 57629 Luckenbach (DE); Hitzek, Alexander, 57629 Luckenbach (DE); Schmengler, Christian, 57629 Luckenbach (DE); Müller-Roden, Karin, 57629 Luckenbach (DE); Käsgen, Klaus, 42799 Leichlingen (DE)
(74) Vertreter: Markowitz, Markus

(56) Entgegenhaltungen:
- DE-A1-102009 008 105
- DE-A1-102014 015 474
- DE-A1-102014 205 666
- DE-A1-102015 204 813

## Beschreibung

Die Erfindung betrifft eine Bremsscheibe für eine Radbremse eines Landfahrzeugs, aufweisend einen aus Grauguss gebildeten Grundkörper mit wenigstens einer axialen Reibseite, wenigstens eine auf die axiale Reibseite aufgebrachte Korrosionsschutzschicht und wenigstens eine auf die Korrosionsschutzschicht aufgebrachte Verschleißschutzschicht. Des Weiteren betrifft die Erfindung ein Verfahren zum Herstellen einer Bremsscheibe für eine Radbremse eines Landfahrzeugs, wobei ein Grundkörper aus Grauguss hergestellt wird, der wenigstens eine axiale Reibseite aufweist, auf die axiale Reibseite wenigstens eine Korrosionsschutzschicht aufgebracht wird und auf die Korrosionsschutzschicht wenigstens eine Verschleißschutzschicht aufgebracht wird.

Herkömmliche Bremsscheiben für Radbremsen von Landfahrzeugen können unter Verwendung eines Sandguss-Verfahrens aus einem kostengünstigen Graugusswerkstoff hergestellt werden. Der Graugusswerkstoff kann durch Gießen und nachfolgende Dreh- bzw. Schleifbearbeitung in die gewünschte Form mit einer gewünschten Oberflächengüte im Bereich der Reibringoberfläche gebracht werden.

Aufgrund der guten Wärmeleitfähigkeit infolge von Graphitlamellen in der Gussstruktur eignet sich das Graugussmaterial zwar gut für den Einsatz zur Herstellung von Bremsscheiben, jedoch zeigt das Graugussmaterial aufgrund einer geringen Härte von etwa 200 HV bis etwa 230 HV eine nur begrenzte Verschleißbeständigkeit, besonders in Verbindung mit Bremsbelägen, die auf dem Europäischen Markt im Einsatz sind. Die Reibmaterialien von Bremsbelägen enthalten abrasive Stoffe, die stabile Reibkoeffizienten in einem weiten Temperaturbereich sichern. Nachteil ist ein erhörter Bremsscheibenverschleiß.

Auf den Märkten außerhalb von Europa verwenden Autohersteller NAO-Reib-materialien (Non-Asbestos Organic-Reibmaterialien), die deutlich weniger Verschleiß der Bremsscheibe verursachen, wobei aber die Reibwerte nur bis etwa 400 °C stabil bleiben. Beim Bremsvorgang entstehen daher Verschleiß- und Feinstaub-Partikel. Die Feinstaubbelastung in der Luft von Innenstädten, hervorgerufen durch den Straßenverkehr, rückt immer stärker in den Fokus der Öffentlichkeit. Außerdem beschweren sich viele Fahrzeugkunden über die starke Verschmutzung teurer Aluminiumfelgen durch eingebrannten Abrieb von Scheibenbremsen.

Zudem hat ein Graugussmaterial eine sehr schlechte Korrosionsbeständigkeit. Nach nur einem Tag bei Regenwetter ist die Bremsscheibe üblicherweise rost-rot, wenn das Fahrzeug nicht bewegt wird. Erst wenn die rostige Oberfläche durch die abrasive Wirkung der Bremsbeläge beansprucht und abgetragen wird, ergibt sich eine metallisch saubere, optisch ansprechende Oberfläche. Bei Hybrid-Fahrzeugen wird aber eine solche Bremsscheibe mit rauer Rost-Rot-Oberfläche nur im Falle einer stärkeren Bremsung (> 0,3 • g (g: Fallbeschleunigung)) ausreichend mechanisch beansprucht. Dabei kann es dann zu einem Bremsen-Rubbeln und/oder zur Beschädigung des Bremsbelags und/oder zu einer unangenehmen Geräuschbildung kommen.

Daher sind sehr viele Beschichtungslösungen für Bremsscheiben vorgeschlagen worden, um die beschriebenen Nachteile zu reduzieren. Ein ferritisches Nieder-Temperatur-Nitrocarburierungs (FNC)-Verfahren liefert einen temporären Korrosions- und Verschleißschutz. Jedoch ist diese Schutzwirkung bereits nach etwa 10.000 km verschwunden, sobald die dünne Nitrierzone von nur 10 µm Dicke durch Abrasion abgetragen worden ist. Besonders bei sehr abrasiv wirkenden Belägen gemäß einer ECE-Norm wird die Beschichtung sehr schnell entfernt. Trotzdem kann so ein temporärer Schutz zu moderaten Kosten außerhalb von Europa bei Verwendung von NAO-Belägen von Interesse sein. Stehen nämlich Neufahrzeuge beim Händler für einige Tage draußen im Regenwetter, so würde ein Kurzzeit-Korrosionsschutz beim Kunden eines Fahrzeugs mit teuren Alufelgen einen optisch besseren Eindruck hinterlassen, auch wenn der Effekt dann nach einigen Wochen/Monaten verschwunden sein sollte.

Des Weiteren ist eine PSCB (= Porsche Surface Coated Brake)-Bremsscheibe mit einer chemischen Nickel-Korrosionsbarriere und einer unter Verwendung eines Hochgeschwindigkeits-Flammspritzverfahrens (HVOF-Verfahren) gebildeten WC-Cr₃C₂-Ni-Deckschicht auf den Markt gekommen, die zu einer 90%igen Reduktion von Feinstaubemissionen führen soll. Diese sehr teure Hartmetall-Beschichtung lässt sich aber nicht weltweit für alle Bremsscheiben auftragen, weil das strategisch wichtige WC-Material nicht in ausreichenden Mengen verfügbar ist.

Die DE 10 2014 006 064 A1 offenbart eine Grauguss-Bremsscheibe, bei der verschiedene Schichtsysteme für den Korrosions- und für den Verschleißschutz zum Einsatz kommen. Hierbei wird in einen Reibring zunächst eine feine Nut mit Hinterschnitt eingebracht, um eine gute Verklammerung der später aufgebrachten thermischen Spritzbeschichtung zu erhalten. Zunächst wird dann eine weiche NiCr-Plasmaspritzschicht aufgetragen, die mögliche Risse an der harten Deckschicht stoppen soll. Damit aber auch der notwendige Korrosionsschutz gegeben ist und eine Unterkorrosion der Verschleißbeschichtung vermieden werden kann, werden die Graugussscheiben nach dem Einbringen der Verklammerungsnuten ein- oder zweifach einer Nitrier- und Oxidier-Randschichtbehandlung unterzogen. Anschließend werden dann die Haft- und die Verschleißschutzschicht durch thermisches Spritzen aufgetragen.

Weiterhin wurden Korrosionsschutzschichten durch ein Plasma-Pulver-Auftragschweißverfahren oder ein Laserauftragschweißverfahren aufgetragen. Hierbei stellt sich aber heraus, dass die Graphitlamellen im Graugussmaterial der Bremsscheiben bei der Herstellung einer dichten Anbindungszone störend wirken. In der DE 10 2010 048 075 B4 werden hinsichtlich einer Optimierung der Haftung und einer Reduzierung von Unterkorrosion an Graugussbremsscheiben mit thermisch gespritzten Verschleißschutzschichten durch Vermeiden des Zutritts korrosiver Medien zu Grafitlamellen verschiedene Verfahren aufgeführt, die eine von Grafitlamellen befreite Oberfläche von Graugussbremsscheiben ermöglichen.

Die DE 10 2010 052 735 A1 betrifft eine Bremsscheibe mit einem Bremsscheibengrundkörper mit zumindest einer Reibringoberfläche, die mit einer thermischen Spritzschicht beschichtet ist. Über die Reibringoberfläche erstreckt sich zumindest eine Vertiefungslinie, die zumindest an einer in Bezug auf ihre Basis vertikalen Wandung einen Hinterschnitt aufweist, wobei die hinterschnittene Vertiefungslinie einen Haftgrund für die thermische Spritzschicht bereitstellt.

Die DE 10 2012 022 775 A1 betrifft eine korrosionsgeschützte Verbundbremsscheibe, die einen Bremsscheibentopf und einen Reibring aufweist, die mittels einer Verzahnung gefügt sind. Die Verzahnung des Reibrings ist mit einem Zink-Staublack beschichtet und die Verzahnung des Bremsscheibentopfs ist mit einer Zink-Nickel Beschichtung beschichtet.

Die JP 2005 239 115 A offenbart einen Bremsrotor mit einer durch Feuerverzinken hergestellten Rostschutzbeschichtung auf einer Außenfläche eines Befestigungsflansches, der eine Befestigungsfläche des Bremsrotors ist.

Die JP 2009 168 162 A offenbart einen Scheibenbremsrotor mit einer Reibfläche, die mit einem Phosphatfilm beschichtet ist und einer Oberflächenbehandlung mit starkem Alkali unterzogen wird, so dass eine Zinkverbindung auf der Reibfläche gegeben ist.

Die DE 10 2014 004 616 A1 betrifft eine Verschleißschutzschicht aus einer Eisenbasis-Legierung auf einer Bremsscheiben-Bremsfläche. Die Zusammensetzung weist 0,5 bis 2 Gew.-% C, 3 bis 13 Gew.-% Al und einen die 100 Gew.-% ergänzenden Restanteil Eisen auf.

Die DE 10 2015 122 325 A1 betrifft eine Bremsscheibe mit einer Außenfläche, einer ersten und einer zweiten Bremsfläche, die sich gegenüberliegen und jeweils durch die Außenfläche begrenzt werden, um einen ersten und einen zweiten Bremsflächenrand, die sich gegenüberliegen, zu bilden, und mehrere konzentrische Rillen, die an der ersten Bremsfläche enthalten sind.

Die unter dem Link http://brakedisc.blogspot.com/ abrufbare Veröffentlichung offenbart eine Bremsscheibe mit einer Zinkbeschichtung für den Korrosionsschutz. So ist bekannt, dass Zink-Staubbeschichtungen einen guten Korrosionsschutz im Bereich der Stege im Zwischenbereich bei belüfteten Scheiben darstellen, dass aber die korrosionsschützende Zink-Schicht auf der Reibfläche nach kurzer Zeit durch die abrasive Wirkung der Bremsbeläge wieder entfernt wird. Weiterhin ist bekannt, dass man dem Bremsbelag einen hohen Anteil an Zink-Pigmenten zumischen kann. Dadurch wird ständig neues Zink-Material auf die Scheibenoberfläche eingebracht und aufgerieben, wodurch das Korrosionsverhalten deutlich verbessert wird. Es können sich aber Nachteile hinsichtlich des Reibverhaltens ergeben wobei das Verschleißproblem der Graugussscheibe hierdurch auch noch nicht gelöst ist.

Die DE 20 2018 102 704 U1 offenbart einen Bremskörper, der einen Grundkörper mit einer ersten als Reibfläche ausgebildeten Oberfläche und einer zweiten als Grundfläche ausgebildeten Oberfläche umfasst. Der Grundfläche kommt im Unterschied zur Reibfläche keine Reib- oder Bremsfunktion zu. Die Grundfläche umfasst einen Bereich der Oberfläche des Grundkörpers, welche teilweise oder vollständig benachbart zur Reibfläche angeordnet ist. Der Grundkörper kann aus einem Basismaterial, wie beispielsweise Grauguss, bestehen. Vorgeschlagen wird, dass der Bremskörper eine auf die Grundfläche aufgebrachte Grundflächenbeschichtung aufweist. Bevor die Grundflächenbeschichtung aufgebracht wird, wird diese aufgeraut, wozu auch ein Strahlverfahren mit Strahlgut verwendet wird. Mit der DE 20 2018 102 704 U1 sollen z.B. Kühlkanäle beschichtbar sein. Weisen diese Hinterschneidungen auf, ist eine vollständige Beschichtung aber nicht zu erwarten, wobei mit dem gewählten Lichtbogenspritzverfahren zudem hohe Schichtdicken aufgespritzt werden, was zu Veränderungen der Kühlkanalgeometrie führen kann.

Die US 8 006 740 B2 offenbart ein Verfahren zum Herstellen eines Bremsrotors, bei dem eine Vielzahl von Metalleinsatzabschnitten hergestellt werden. Jeder Einsatzabschnitt umfasst eine Innenseite und eine Außenseite mit einer Vielzahl von Befestigungselementen, die mit der Innenseite verbunden sind. Das Verfahren umfasst auch das Positionieren der Vielzahl von Einsatzabschnitten in einer Form, so dass die Innenseite von einem der Einsatzabschnitte der Innenseite eines anderen Einsatzabschnitts zugewandt ist. Das Verfahren umfasst auch das Einführen von geschmolzenem Aluminium in die Form, so dass das geschmolzene Aluminium die Innenseite jedes Einsatzabschnitts berührt. Das Verfahren umfasst ferner das Bilden einer mechanischen Verbindung zwischen dem Aluminium und mindestens einem Teil von mindestens einem der Einsätze.

Die unter dem Link https://www.sciencedirect.com/science/article/pii/S0924013609-002325 abrufbare Veröffentlichung offenbart eine Behandlung einer Aluminiumoberfläche mit einem pulsierenden Wasserstrahl.

Die DE 10 2014 205 666 A1 und die DE 10 2015 204 813 A1 offenbaren beide eine Bremsscheibe, die einen aus Grauguss hergestellten Grundkörper aufweist. Dieser Grundkörper ist mit einer Korrosionsschutzschicht überzogen, die ihrerseits eines Verschleißschutzschicht trägt. Diese Korrosionsschutzschicht ist nassmetallurgisch aufgetragen, indem der Grundkörper in eine Aluminium- und/oder Zinklegierungsschmelze eingetaucht wird.

Der Erfindung liegt die Aufgabe zugrunde, eine kostengünstige Beschichtung für eine Bremsscheibe bereitzustellen, die eine verbesserte Korrosions- und Verschleißbeständigkeit für Reibflächen von Bremsscheiben mit einem Grundkörper aus Grauguss ermöglicht.

Erfindungsgemäß wird die Aufgabe durch eine Bremsscheibe mit den Merkmalen des Anspruchs 1 bzw. 2 gelöst, deren Korrosionsschutzschicht eine Sherardisierungs-Verzinkungsschicht oder eine Aluminium-Pulver-basierte Beschichtung ist.

Es ist darauf hinzuweisen, dass die in der nachfolgenden Beschreibung einzeln aufgeführten Merkmale sowie Maßnahmen in beliebiger technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß wird eine aktive Zink-Korrosions-Barriere durch die auf die axiale Reibseite der Bremsscheibe aufgetragene Korrosionsschutzschicht bzw. Sherardisierungs-Verzinkungsschicht oder Aluminium-Pulver-basierte Beschichtung ausgebildet. Die Korrosionsschutzschicht kann also durch ein Sherardisierverfahren bzw. ein sogenanntes Pack-Diffusion-Verfahren auf die axiale Reibseite aufgetragen und somit hergestellt werden. Bei dem Sherardisierverfahren können die Bremsscheiben in einem Gemisch aus Zink mit Quarzsand/Korund bis maximal 419 °C und insbesondere bis zum Schmelzpunkt von Zink erhitzt werden. Dabei bildet sich bereits bei Temperaturen unterhalb des Schmelzpunkts von Zink ein Zinkdampf, der eine homogene Eisen-Zink-Randschicht auf der Oberfläche bzw. der axialen Reibseite des Grundkörpers bildet, ohne die Entstehung von Wasserstoff wie beim Feuerverzinken. Aufgrund der niedrigen Prozesstemperatur tritt kein Verzug der Bremsscheiben auf.

Diese recht harte zinkreiche Korrosionsschutzschicht bietet ideale Voraussetzungen, um darauf, ohne jegliche spanende Bearbeitung oder Korund-Strahl-Behandlung, eine Verschleißschutzschicht aufzutragen, beispielsweise unter Verwendung eines Hochgeschwindigkeitsflammspritzverfahrens (HVOF-Verfahren). Wenn hierzu vorab eine Strahlbehandlung an der Korrosionsschutzschicht ausgeführt werden müsste, wäre das Risiko gegeben, dass die beispielsweise 50 µm bis maximal 100 µm dünne Korrosionsschutzschicht lokal durchgeschlagen wird, wodurch der gewünschte Korrosionsschutz nicht mehr gewährleistet werden könnte.

Die Korrosionsschutzschicht weist mit etwa 40 HRC eine höhere Härte als konventionell feuerverzinkte Oberflächen auf. Die Korrosionsschutzschicht, evtl. mit Passivierung, kann beispielsweise als kostengünstige Alternative zu einer unter Verwendung eines FNC-Verfahrens hergestellten Beschichtung verwendet werden. Die Korrosionsschutzschicht sollte weder beim anschließenden Beschichten mit der Verschleißschutzschicht noch beim Betreiben der Radbremse aufgeschmolzen werden können. Hierdurch scheiden schmelzmetallurgisch aufgetragene Beschichtungen als Korrosionsschutzschichten aus, die immer reines Zink enthalten.

Die erfindungsgemäße Korrosionsschutzschicht ist hart und kann flächendeckend auf der ganzen Grundkörperoberfläche aufgebracht sein, so dass es auch im Bereich der Bremsennabe unter den Schraubenkräften zu keinem Setzen und Lockern von Schrauben kommen kann. Der permanente Korrosionsschutz ist dadurch auch auf der Kontaktfläche der Bremsscheibe zur Radnabe gegeben, so dass es zu keinem Festrosten der Bremsscheibenoberfläche auf einem Achsträger kommen kann. Zudem kann die erfindungsgemäße Korrosionsschutzschicht einen guten Korrosionsschutz für Kühlungsrippen einer belüfteten Bremsscheibe bieten, wenn die Korrosionsschutzschicht auch an den Kühlrippen ausgebildet wird. Durch diese Maßnahmen kann eine Lebensdauer der Bremsscheibe von etwa 240.000 km realisiert werden, wobei nur ein geringer Verschleiß der Reibfläche der Bremsscheibe und keine Korrosion von restlichen Oberflächen der Bremsscheibe erfolgt.

Alternativ wird die Korrosionsschutzschicht durch Beschichten der axialen Reibseite des Grundkörpers mit einem Aluminium-Pulver-basierten Werkstoff hergestellt. Dieses Beschichten kann ein Auftragen des Aluminium-Pulver-basierten Werkstoffs auf die axiale Reibseite und ein anschließendes Sintern des so gebildeten Werkstoffverbunds beinhalten. Die Aluminium-Pulver-basierte Beschichtung bildet eine Opferkorrosionsschutzschicht aus. Der Werkstoff mit der Bezeichnung SermeTel® 5380DP kann beispielsweise hierfür zum Einsatz gebracht werden. Nach dem Aufsprühen der Aluminium-Pulver haltigen Suspension werden die verwendeten Binder und Lösungsmittel durch Auslagerung im Ofen oberhalb von 300°C entfernt. Dabei wird die Anbindung der Aluminium Flitter an das Substrat-Material durch Diffusionsvorgänge verbessert. Anschließend kann dann noch eine anorganische Deckschicht aufgetragen und eingesintert werden, um einen optimalen Korrosionsschutz z.B. gegen salzhaltiges Spritzwasser zu erreichen.

Gemäß einer vorteilhaften Ausgestaltung ist die mit der Korrosionsschutzschicht verbundene Oberfläche des Grundkörpers aufgeraut. Das Aufrauen der Oberfläche des Grundkörpers kann beispielsweise durch einen geeigneten Drehprozess oder durch eine anderweitige spanende Bearbeitung erfolgen mit anschließendem Hochdruck-Wasserstrahlverfahren, vorzugsweise mit pulsierenden Hochdruck-Wasserstrahlen. Durch das Aufrauen der Oberfläche des Grundkörpers kann die Haftfestigkeit der Verschleißschutzschicht an dem Grundkörper weiter gesteigert werden. Bei dem üblichen Korund-Strahlverfahren werden eingebettete Strahlpartikel in die aufgeraute Oberfläche des Grundkörpers eingeschossen und ein hoher Anteil verklammert sich in der Randschicht und lässt sich nicht einfach durch Abblasen entfernen.

Bei dem Hochdruck-Wasserstrahlverfahren wird ein Hochdruck-Wasserstrahl auf die axiale Reibseite gerichtet, wobei gleichzeitig hierzu Ultraschallschwingungen in dem Hochdruck-Wasserstrahl erzeugt werden. Durch die Ultraschallschwingungen wird der Kavitationseffekt verstärkt, bei dem die durch Ultraschall erzeugten Schwingungen in dem Hochdruck-Wasserstrahl kleinste Bläschen erzeugen, die sofort wieder kollabieren. Wenn diese Bläschen in der Nähe der Substratoberfläche kollabieren, entstehen lokal hohe Druckspitzen, wodurch Schmutzpartikel sowie eine dünne Randzone vom Substratmaterial abgetragen wird. Eine derartig aufgeraute und gereinigte Oberfläche des Grundkörpers ist ideal geeignet für ein nachfolgendes Sherardiseren bzw. Aluminium-Pulver-basierten Beschichten zur Ausbildung der Korrosionsschutzschicht. Dabei wird die Diffusion von Zink bzw. Aluminium in die Oberfläche des Grundkörpers nicht durch störende eingeschossene Korund-Partikel behindert. Es sind also im Gegensatz zum konventionellen Korund-Strahlen oder allgemein Strahlen mit Strahlgut nach Durchführung des Hochdruck-Wasserstrahlverfahrens keine Strahl(gut)rückstände in der Oberfläche des Grundkörpers vorhanden, die das Eindiffundieren von Zink bzw. Aluminium in die Oberfläche des Grundkörpers stören könnten. Mittels des Hochdruck-Wasserstrahlverfahrens wird die damit beaufschlagte Oberfläche des Grundkörpers gereinigt und gleichzeitig aktiviert. Insbesondere werden oberflächennahe Grafitlamellen aus der Oberfläche herausgerissen und entfernt, so dass sie die späteren Diffusionsvorgänge nicht negativ beeinflussen können, während sie nach einem mechanischen Strahlvorgang auf der Oberfläche aufgeschmiert verbleiben können.

Die mittels des Hochdruck-Wasserstrahlverfahrens aufgeraute Oberfläche des Grundkörpers ermöglicht dann eine optimale Diffusion von Aluminiumatomen des Aluminium-Pulver-basierten Beschichtungswerkstoffs in den Grundkörper während eines Sinterns des Aluminium-Pulver-basierten Werkstoffs zur Herstellung der Aluminiumbasierten Beschichtung. Hierdurch wird die Haftung zwischen der Aluminium-Pulver-basierten Beschichtung und dem Grundkörper verbessert und es bildet sich dabei eine größere Menge von harten Partikeln einer intermetallischen Phase.

Die Verschleißschutzschicht kann unter Verwendung eines thermischen Beschichtungsverfahrens auf die Zink oder Aluminium-Korrosionsschutzschicht aufgebracht werden. Als thermisches Beschichtungsverfahren kann beispielsweise das Hochgeschwindigkeitsflammspritzverfahren zum Einsatz kommen. Eine freiliegende Oberfläche der Verschleißschutzschicht kann abschließend geschliffen werden. Die Korrosionsschutzschicht kann als aktive kathodische Zinkschicht dienen, die zudem als raue Verklammerungsbeschichtung für die spätere HVOF-Verschleißschutzschicht dient, so dass auf eine weitere Strahlbehandlung der Korrosionsschutzschicht verzichtet werden kann.

Der Grundkörper kann ringförmig ausgebildet sein. Der Grundkörper kann unter Verwendung eines Sandgussverfahrens hergestellt werden, insbesondere als Graugussgrundkörper. Die Korrosionsschutzschicht kann bereichsweise oder vollflächig auf die axiale Reibseite aufgebracht sein. Die Verschleißschutzschicht kann bereichsweise oder vollflächig auf die Korrosionsschutzschicht aufgebracht sein. Der Grundkörper kann auch zwei axiale Reibseiten aufweisen, die sich axial einander gegenüberliegen und entsprechend beschichtet sind. Die Korrosionsschutzschicht kann auch auf die Stirnseiten der Reibseiten, also des Grundkörpers oder in deren Zwischenraum bzw. in Kühlkanälen aufgebacht sein. Dabei kann die stirnseitig und in dem Zwischenraum angeordnete Aluminium-Pulver-basierte Korrosionsschutzschicht aufgebracht werden, wenn die Verschleißschutzschicht aufgebracht ist. So kann die Aluminium-Pulver-basierte Korrosionsschutzschicht quasi über die Ränder der Verschleißschutzschicht gezogen werden, wodurch eine Korrosionsunterwanderung verhindert werden kann. Möglich ist natürlich auch, wenn die Stirnseiten bzw. der Zwischenraum der einander axial gegenüberliegenden Reibseiten, also die Kühlkanäle mit der Korrosionsschutzschicht versehen werden, bevor die Verschleißschutzschicht aufgebracht ist. Ist die Korrosionsschutzschicht mittels Laserverfahren aufgebracht, wobei die Verschleißschutzschicht ebenfalls mittels Laserverfahren oder HVOF aufgebracht ist, kann ebenfalls diese zuvor genannte Aluminium-Pulver-basierte Stirnseiten- bzw. Zwischenraumversiegelung vorgesehen werden.

Die Bremsscheibe kann als unbelüftete Bremsscheibe oder als belüftete Bremsscheibe mit Kühlrippen ausgebildet sein. Die Bremsscheibe kann ringförmig oder tellerförmig ausgebildet sein.

Das Landfahrzeug kann ein Kraftfahrzeug, insbesondere ein Personenkraftwagen oder ein Nutzfahrzeug sein.

Eine weitere vorteilhafte Ausgestaltung sieht vor, dass die Verschleißschutzschicht aus einem SiC-Werkstoff mit wenigstens einem oxidischen oder metallischen Binder hergestellt ist. Der SiC-Werkstoff kann beispielsweise unter Verwendung eines thermischen Spritzverfahrens, bevorzugt Hochgeschwindigkeitsflammspritzen (HVOF), besonders bevorzugt HVOF mit Flüssigbrennstoff, auf die axiale Reibseite des Grundkörpers aufgebracht werden. Ein reines SiC-Beschichtungspulver würde sich jedoch bei einem thermischen Beschichtungsverfahren zersetzen, weshalb etwa 1 µm große Siliciumcarbide mit einer Hülle aus entweder Oxiden oder Metallen umgeben werden können. Dieses Hüll-Material nimmt beispielsweise die Wärme aus einer HVOF-Flamme auf und erweicht, so dass es beim Aufprall auf der Oberfläche zu einer dichten Beschichtung aus SiC-Partikeln mit einer Umhüllung aus Oxiden oder Metallen kommt. SiC ist bekannt für seine sehr hohe Abrasionsbeständigkeit. Weiterhin hat SiC eine hohe Wärmeleitfähigkeit, was es für den Einsatz als Verschleißschutzschicht auf Bremsscheiben qualifiziert. In Verschleißtests stellte sich heraus, dass eine derart beschichtete Bremsscheibe keinerlei Scheibenverschleiß zeigt. Das Verschleißergebnis ist umso erstaunlicher, da Härtemessungen nur moderate Härtewerte erkennen lassen mit einem Mittelwert von knapp über 600 HV0,3. Vermutlich werden die nur 1 µm großen SiC-Partikel bei der Härteprüfung kaum erfasst und es wird daher eher die Härte der (hier oxidischen) Umhüllung gemessen. SiC an sich weist eine Härte im Bereich von oberhalb 2.200 HV0.3 auf.

Nach einer weiteren vorteilhaften Ausgestaltung ist die Verschleißschutzschicht aus einer Eisenbasis-Legierung mit einer Vanadiumcarbid-Verstärkung oder einer Niobcarbid-Verstärkung oder einer Borcarbid-Verstärkung oder einer Chromcarbid-Verstärkung hergestellt. Hierbei kann die Verschleißschutzschicht aus einer harten Eisenbasis-Legierungen mit Vanadiumcarbid als Verstärkungskomponente in einer durch Legieren mit Chrom korrosionsfesten, im Wesentlichen ferritischen Matrix hergestellt werden. Der Vanadiumgehalt eines Spritzzusatzwerkstoffs kann mehr als 6 Gew.-% betragen, bevorzugt 17 Gew.-%. Derartige harte Eisen-Basislegierungen erzielen eine hohe Härte (im Fall von 17 Gew.-% Vanadium - FeCrV17 - etwa 850 HV0,3) nicht durch eine harte Matrix, sondern durch sehr harte Vanadiumcarbide als Verstärkungskomponente. Weil die Matrix aus einem duktilen Eisenmischkristall besteht, weisen die betreffenden Verbundwerkstoffe eine außergewöhnliche hohe Beständigkeit gegen Schlagbeanspruchung und Kantenstabilität auf und werden vielfach zum Ausbilden von Schneid- und Messerkanten eingesetzt. Grundsätzlich entwickelt Niob als Legierungselement in harten Eisen-Basislegierungen eine zu Vanadium vergleichbare Wirkung bezüglich des Ausscheidungsverhaltens von Karbiden. Daher werden alternativ zu hoch Vanadium-haltigen harten Eisen-Basislegierungen solche mit hohen Niobgehalten von mehr als 8 Gew.-%, bevorzugt mehr als 15 Gew.-%, vorgeschlagen. Fe-CrBC-Hartlegierungen mit Chromgehalten von mindestens 17 Gew.-% und Borgehalten von mindestens 2 Gew.-%, bevorzugt 25 Gew.-% Chrom und 5 Gew.-% Bor, erzielen eine Härte von ca. 900 HV0,3. Die Härte dieser Legierungsfamilie beruht auf der Bildung von Komplexboriden und einer extrem feinen (häufig sogar röntgenamorphen) Mikrostruktur. Die extrem feine Kristallstruktur ist auch die Basis für eine hervorragende Beständigkeit gegen Schlagbeanspruchung. Chromgehalte von mindestens 17 Gew.-% (bis hin zu 35 Gew.-%) bewirken eine hohe Korrosionsbeständigkeit. Alternativ werden FeCrC-Metall-Keramik-Verbundwerkstoffe, bestehend aus einer metallischen Matrix auf Basis von Eisen mit Chromgehalten von mindestens 12 Gew.-%, bevorzugt 20 Gew.-% bis 30 Gew.-%, um eine gute Korrosionsfestigkeit abzusichern, und mit Chromkarbiden (bevorzugt Cr₃C₂) mit einem Anteil von mindestens 50 Gew.-%, bevorzugt 75 Gew.-% bis 80 Gew.-%, zum Erzielen einer hohen Schichthärte (etwa 900 HV0,3 bis 1.000 HV0,3) und Abriebbeständigkeit, vorgeschlagen. Dabei können durch Agglomerieren (Sprühtrocknen) und Sintern hergestellte Verbundpulver zum Einsatz kommen, um einerseits die besonders harten Chromkarbide Cr₃C₂ - und nicht aus der Schmelzphase gebildete chromreiche Mischkarbide, die in konventionellen schmelzmetallurgisch hergestellten harten Eisen-Basislegierungen versprödend wirken - in den Schichten vorliegen zu haben und um die metallische Matrix nicht durch Anreichern mit Kohlenstoff zu verspröden, wodurch die Korrosionsbeständigkeit und die Beständigkeit gegen Schlagbeanspruchung abgesenkt werden würde. Grundsätzlich sind auch andere harte Eisen-Basis-Legierungen einsetzbar. Die oben aufgeführten Verschleißschutzwerkstoffe bieten allerdings den Vorteil, dass gegebenenfalls doch noch anfallender Abrieb der Verschleißschutzschicht der Bremsscheibe keine Elemente enthält, denen ein besonders hohes Gesundheitsgefährdungspotenzial beigemessen wird, wie beispielsweise Nickel, Kobalt, Kupfer und Wolfram. Die betreffenden Verschleißschutzschichten werden über thermische Spritzverfahren, bevorzugt Hochgeschwindigkeitsflammspritzen (HVOF), besonders bevorzugt HVOF mit Flüssigbrennstoff, hergestellt.

In Verschleißtests hat sich gezeigt, dass eine HVOF-Beschichtung aus FeCrV17-Material zu einer ausgezeichneten Verschleißpaarung mit konventionellen Bremsbelägen führt. So ergab sich kein Verschleiß an der Bremsscheibe und kein erhöhter Verschleiß an dem Bremsbelagmaterial im Vergleich zur Prüfung unbeschichteter Bremsscheiben. Es kann beispielsweise ein wassergestrahlter, sherardisierter Grundkörper mit einer etwa 400 µm dicken FeCrV17-Verschleißschutzschicht versehen sein. Die die Korrosionsschutzschicht bildende Sherardisier-Beschichtung folgt dabei der aufgerauten Oberfläche des Grundkörpers und stellt somit den erforderlichen Korrosionsschutz sicher. Die Verschleißschutzschicht aus einem Messerstahl FeCrV17 kann fein verteilte Vanadiumcarbide mit einer mittleren Größe von weniger als 2 µm enthalten, die einen besonders geringen Verschleiß sowohl an der Bremsscheibe als auch an damit zusammenwirkenden konventionellen Bremsbelägen bewirken.

Die oben beschriebenen Verschleißschutzschichten bestehen somit aus kostengünstigen Materialien, die sich trotz hoher Härte durch Korrosionsbeständigkeit und Beständigkeit gegen Steinschlagbeanspruchung auszeichnen.

Die obige Aufgabe wird des Weiteren durch ein Verfahren mit den Merkmalen des Anspruchs 6 bzw. 7 gelöst, bei dem die Korrosionsschutzschicht unter Verwendung eines Sherardisierverfahrens oder durch Beschichten der axialen Reibseite aber auch der Kühlstegbereiche sowie den angrenzenden Bereichen mit einem Aluminium-Pulver-basierten Werkstoff hergestellt wird.

Mit dem Verfahren sind die oben mit Bezug auf die Bremsscheibe genannten Vorteile entsprechend verbunden. Insbesondere kann die Bremsscheibe gemäß einer der oben genannten Ausgestaltungen oder einer Kombination von wenigstens zwei dieser Ausgestaltungen miteinander unter Verwendung des erfindungsgemäßen Verfahrens hergestellt werden.

Der Grundkörper kann unter Verwendung eines Sandgussverfahrens hergestellt werden. Die Verschleißschutzschicht kann unter Verwendung eines thermischen Beschichtungsverfahrens, insbesondere eines thermischen Spritzverfahrens, bevorzugt eines Hochgeschwindigkeitsflammspritzverfahrens, auf die Korrosionsschutzschicht aufgetragen werden.

Gemäß einer vorteilhaften Ausgestaltung wird die axiale Reibseite vor dem Aufbringen der Korrosionsschutzschicht einem spanabhebenden Drehen unterworfen. Insbesondere kann die axiale Reibseite unter Verwendung eines trockenen spanabhebenden Drehens bearbeitet und hierdurch geglättet werden.

Eine weitere vorteilhafte Ausgestaltung sieht vor, dass die axiale Reibseite vor dem Aufbringen der Korrosionsschutzschicht unter Verwendung eines Hochdruck-Wasserstrahlverfahrens oder durch eine spanende Bearbeitung aufgeraut wird. Mit dieser Ausgestaltung sind die oben mit Bezug auf die entsprechende Ausgestaltung der Bremsscheibe genannten Vorteile entsprechend verbunden.

Nach einer weiteren vorteilhaften Ausgestaltung wird die Verschleißschutzschicht unter Verwendung eines Hochgeschwindigkeitsflammspritzverfahrens auf die Korrosionsschutzschicht aufgetragen. Dies ermöglicht eine schnelle Herstellung der Verschleißschutzschicht.

Gemäß einer weiteren vorteilhaften Ausgestaltung wird eine der Korrosionsschutzschicht abgewandte Oberfläche der Verschleißschutzschicht geglättet. Beispielsweise kann die Oberfläche der Verschleißschutzschicht durch Schleifen geglättet werden.

Obwohl bisher lediglich von Bremsscheiben die Rede war, liegt es im Sinne der Erfindung auch Trommelbremsen mit der erfindungsgemäßen Beschichtung zu versehen. Von dem Erfindungsgedanken umfasst ist also auch das Verfahren zum Herstellen von Trommelbremsen mit der erfindungsgemäßen Beschichtung (Korrosionsschutzschicht/Verschleißschutzschicht).

Weitere vorteilhafte Ausgestaltungen der Erfindung sind in den Unteransprüchen und der folgenden Figurenbeschreibung offenbart. Es zeigen
- Fig. 1: einen schematischen Axialschnitt eines Ausführungsbeispiels für eine erfindungsgemäße Bremsscheibe, und
- Fig. 2: ein Ablaufdiagramm eines Ausführungsbeispiels für ein erfindungsgemäßes Verfahren.

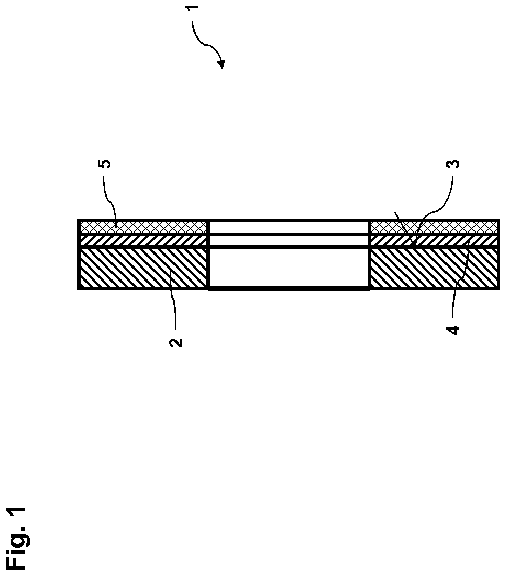

Fig. 1 zeigt einen schematischen Axialschnitt eines Ausführungsbeispiels für eine erfindungsgemäße Bremsscheibe 1 für eine nicht gezeigte Radbremse eines nicht gezeigten Landfahrzeugs.

Die ringförmig ausgebildete Bremsscheibe 1 weist einen aus Grauguss gebildeten, ringförmig ausgebildeten Grundkörper 2 mit einer axialen Reibseite 3, eine auf die axiale Reibseite 3 aufgebrachte, ringförmig ausgebildete Korrosionsschutzschicht 4 und eine auf die Korrosionsschutzschicht 4 aufgebrachte, ringförmig ausgebildete Verschleißschutzschicht 5 auf. Die Korrosionsschutzschicht 4 ist eine Sherard-Verzinkungsschicht oder eine Aluminium-Pulver-basierte Beschichtung. Die Oberfläche der mit der Korrosionsschutzschicht 4 verbundenen axialen Reibseite 3 des Grundkörpers 2 ist aufgeraut.

Die Verschleißschutzschicht 5 kann aus einem SiC-Werkstoff mit wenigstens einem oxidischen oder metallischen Binder hergestellt sein. Alternativ kann die Verschleißschutzschicht aus einer Eisenbasis-Legierung mit einer Vanadiumcarbid-Verstärkung oder einer Niobcarbid-Verstärkung oder einer Borcarbid-Verstärkung oder einer Chromcarbid-Verstärkung hergestellt sein.

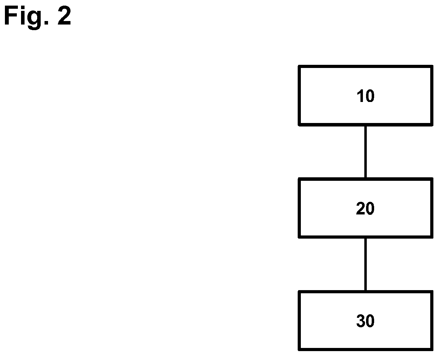

Fig. 2 zeigt ein Ablaufdiagramm eines Ausführungsbeispiels für ein erfindungsgemäßes Verfahren zum Herstellen einer Bremsscheibe für eine Radbremse eines Landfahrzeugs. Die fertige Bremsscheibe kann entsprechend Fig. 1 ausgebildet sein.

In Verfahrensschritt 10 wird ein Grundkörper aus Grauguss hergestellt, der wenigstens eine axiale Reibseite aufweist. Hierzu kann ein Sandgussverfahren eingesetzt werden. Die axiale Reibseite wird zunächst einem spanabhebenden Drehen unterworfen. Danach wird die axiale Reibseite unter Verwendung eines Hochdruck-Wasserstrahlverfahrens aufgeraut. Bei dem Hochdruck-Wasserstrahlverfahren wird ein Hochdruck-Wasserstrahl auf die axiale Reibseite gerichtet. Gleichzeitig werden Ultraschallschwingungen in dem Hochdruck-Wasserstrahl erzeugt.

In Verfahrensschritt 20 wird eine Korrosionsschutzschicht unter Verwendung eines Sherardierverfahrens oder durch Beschichten der axialen Reibseite mit einem Aluminium-Pulver-basierten Werkstoff hegestellt.

In Schritt 30 wird eine Verschleißschutzschicht unter Verwendung eines Hochgeschwindigkeitsflammspritzverfahrens auf die Korrosionsschutzschicht aufgebracht. Eine der Korrosionsschutzschicht abgewandte Oberfläche der Verschleißschutzschicht kann abschließend geglättet werden.

### Bezugszeichenliste:

- 1: Bremsscheibe
- 2: Grundkörper
- 3: Reibseite von 2
- 4: Korrosionsschutzschicht
- 5: Verschleißschutzschicht
- 10: Verfahrensschritt (Herstellen von 2)
- 20: Verfahrensschritt (Aufbringen von 4)
- 30: Verfahrensschritt (Aufbringen von 5)

## Patentansprüche

1. Bremsscheibe (1) für eine Radbremse eines Landfahrzeugs, aufweisend einen aus Grauguss gebildeten Grundkörper (2) mit wenigstens einer axialen Reibseite (3), wenigstens eine auf die axiale Reibseite (3) aufgebrachte Korrosionsschutzschicht (4) und wenigstens eine auf die Korrosionsschutzschicht (4) aufgebrachte Verschleißschutzschicht (5),
**dadurch gekennzeichnet, dass**
die Korrosionsschutzschicht (4) eine Sherard-Verzinkungsschicht ist.

2. Bremsscheibe (1) für eine Radbremse eines Landfahrzeugs, aufweisend einen aus Grauguss gebildeten Grundkörper (2) mit wenigstens einer axialen Reibseite (3), wenigstens eine auf die axiale Reibseite (3) aufgebrachte Korrosionsschutzschicht (4) und wenigstens eine auf die Korrosionsschutzschicht (4) aufgebrachte Verschleißschutzschicht (5),
**dadurch gekennzeichnet, dass**
die Korrosionsschutzschicht (4) eine Aluminium-Pulver-basierte Beschichtung ist.

3. Bremsscheibe (1) nach Anspruch 1 oder 2,
**dadurch gekennzeichnet, dass**
die eine mit der Korrosionsschutzschicht (4) verbundene Oberfläche des Grundkörpers (2) aufgeraut ist.

4. Bremsscheibe (1) nach einem der Ansprüche Anspruch 1 bis 3,
**dadurch gekennzeichnet, dass**
die Verschleißschutzschicht (5) aus einem SiC-Werkstoff mit wenigstens einem oxidischen oder metallischen Binder hergestellt ist.

5. Bremsscheibe (1) nach einem der Ansprüche Anspruch 1 bis 3,
**dadurch gekennzeichnet, dass**
die Verschleißschutzschicht (5) aus einer Eisenbasis-Legierung mit einer Vanadiumcarbid-Verstärkung oder einer Niobcarbid-Verstärkung oder einer Borcarbid-Verstärkung oder einer Chromcarbid-Verstärkung hergestellt ist.

6. Verfahren zum Herstellen einer Bremsscheibe (1) für eine Radbremse eines Landfahrzeugs, wobei ein Grundkörper (2) aus Grauguss hergestellt wird, der wenigstens eine axiale Reibseite (3) aufweist, auf die axiale Reibseite (3) wenigstens eine Korrosionsschutzschicht (4) aufgebracht wird und auf die Korrosionsschutzschicht (4) wenigstens eine Verschleißschutzschicht (5) aufgebracht wird,
**dadurch gekennzeichnet, dass**
die Korrosionsschutzschicht (4) unter Verwendung eines Sherardisierverfahrens hergestellt wird.

7. Verfahren zum Herstellen einer Bremsscheibe (1) für eine Radbremse eines Landfahrzeugs, wobei ein Grundkörper (2) aus Grauguss hergestellt wird, der wenigstens eine axiale Reibseite (3) aufweist, auf die axiale Reibseite (3) wenigstens eine Korrosionsschutzschicht (4) aufgebracht wird und auf die Korrosionsschutzschicht (4) wenigstens eine Verschleißschutzschicht (5) aufgebracht wird,
**dadurch gekennzeichnet, dass**
die Korrosionsschutzschicht (4) durch Beschichten der axialen Reibseite (3) mit einem Aluminium-Pulver-basierten Werkstoff hergestellt wird.

8. Verfahren nach Anspruch 6 oder 7,
**dadurch gekennzeichnet, dass**
die axiale Reibseite (3) vor dem Aufbringen der Korrosionsschutzschicht (4) einem spanabhebenden Drehen unterworfen wird.

9. Verfahren nach Anspruch 6 oder 7,
**dadurch gekennzeichnet, dass**
die axiale Reibseite (3) vor dem Aufbringen der Korrosionsschutzschicht (4) unter Verwendung eines Hochdruck-Wasserstrahlverfahrens aufgeraut wird.

10. Verfahren nach Anspruch 9,
**dadurch gekennzeichnet, dass**
bei dem Hochdruck-Wasserstrahlverfahren ein Hochdruck-Wasserstrahl auf die axiale Reibseite (3) gerichtet wird und gleichzeitig Ultraschallschwingungen in dem Hochdruck-Wasserstrahl erzeugt werden.

11. Verfahren nach einem der Ansprüche 6 bis 10,
**dadurch gekennzeichnet, dass**
die Verschleißschutzschicht (5) unter Verwendung eines Hochgeschwindigkeitsflammspritzverfahrens auf die Korrosionsschutzschicht (4) aufgetragen wird.

12. Verfahren nach einem der Ansprüche 6 bis 11,
**dadurch gekennzeichnet, dass**
eine der Korrosionsschutzschicht (4) abgewandte Oberfläche der Verschleißschutzschicht (5) geglättet wird.

13. Verfahren nach einem der Ansprüche 6 bis 12,
**dadurch gekennzeichnet, dass**
bei dem Hochgeschwindigkeitsflammspritzen von Verschleißschutzschichten ein mit Flüssigbrennstoff betriebener HVOF-Brenner mit vier Pulverinjektoren eingesetzt wird.

## Claims

1. Brake disk (1) for a wheel brake of a land vehicle, having a main body (2), formed from gray cast iron, having at least one axial friction side (3), at least one anti-corrosion layer (4) applied to the axial friction side (3), and at least one anti-abrasion layer (5) applied to the anti-corrosion layer (4),
**characterized in that**
the anti-corrosion layer (4) is a sherardizing layer.

2. Brake disk (1) for a wheel brake of a land vehicle, having a main body (2), formed from gray cast iron, having at least one axial friction side (3), at least one anti-corrosion layer (4) applied to the axial friction side (3), and at least one anti-abrasion layer (5) applied to the anti-corrosion layer (4),
**characterized in that**
the anti-corrosion layer (4) is an aluminum powder-based coating.

3. Brake disk (1) according to Claim 1 or 2,
**characterized in that**
the surface of the main body (2) that is connected to the anti-corrosion layer (4) is roughened.

4. Brake disk (1) according to any of Claims 1 to 3,
**characterized in that**
the anti-abrasion layer (5) is produced from an SiC material containing at least one oxidic or metallic binder.

5. Brake disk (1) according to any of Claims 1 to 3,
**characterized in that**
the anti-abrasion layer (5) is produced from an iron-based alloy having a vanadium carbide reinforcement or a niobium carbide reinforcement or a boron carbide reinforcement or a chromium carbide reinforcement.

6. Method for producing a brake disk (1) for a wheel brake of a land vehicle, wherein a main body (2) is produced from gray cast iron, the main body having at least one axial friction side (3), at least one anti-corrosion layer (4) is applied to the axial friction side (3), and at least one anti-abrasion layer (5) is applied to the anti-corrosion layer (4),
**characterized in that**
the anti-corrosion layer (4) is produced using a sherardizing method.

7. Method for producing a brake disk (1) for a wheel brake of a land vehicle, wherein a main body (2) is produced from gray cast iron, the main body having at least one axial friction side (3), at least one anti-corrosion layer (4) is applied to the axial friction side (3), and at least one anti-abrasion layer (5) is applied to the anti-corrosion layer (4),
**characterized in that**
the anti-corrosion layer (4) is produced by coating the axial friction side (3) with an aluminum powder-based material.

8. Method according to Claim 6 or 7,
**characterized in that**
the axial friction side (3) is subjected to a machining operation involving turning before the application of the anti-corrosion layer (4).

9. Method according to Claim 6 or 7,
**characterized in that**
the axial friction side (3) is roughened using a high-pressure waterjet method before the application of the anti-corrosion layer (4).

10. Method according to Claim 9,
**characterized in that**
in the high-pressure waterjet method, a high-pressure waterjet is directed onto the axial friction side (3) and at the same time ultrasound vibrations are generated in the high-pressure waterjet.

11. Method according to any of Claims 6 to 10,
**characterized in that**
the anti-abrasion layer (5) is applied to the anti-corrosion layer (4) using a high-velocity flame spraying method.

12. Method according to any of Claims 6 to 11,
**characterized in that**
a surface of the anti-abrasion layer (5) which faces away from the anti-corrosion layer (4) is smoothed.

13. Method according to any of Claims 6 to 12,
**characterized in that**
an HVOF burner having four powder injectors, operated with liquid fuel, is used in the high-velocity flame spraying of anti-abrasion layers.

## Revendications

1. Disque de frein (1) pour un frein de roue d'un véhicule terrestre, présentant un corps de base (2) formé de fonte grise avec au moins un côté friction axial (3), au moins une couche de protection anticorrosion (4) appliquée sur le côté friction axial (3), et au moins une couche de protection contre l'usure (5) appliquée sur la couche de protection anticorrosion (4),
**caractérisé en ce que** la couche de protection anticorrosion (4) est une couche shérardisée.

2. Disque de frein (1) pour un frein de roue d'un véhicule terrestre, présentant un corps de base (2) formé de fonte grise avec au moins un côté friction axial (3), au moins une couche de protection anticorrosion (4) appliquée sur le côté friction axial (3) et au moins une couche de protection contre l'usure (5) appliquée sur la couche de protection anticorrosion (4),
**caractérisé en ce que** la couche de protection anticorrosion (4) est un revêtement à base de poudre d'aluminium.

3. Disque de frein (1) selon la revendication 1 ou 2, **caractérisé en ce que** ladite une surface du corps de base (2), reliée à la couche de protection anticorrosion (4), est rendue rugueuse.

4. Disque de frein (1) selon l'une quelconque des revendications 1 à 3, **caractérisé en ce que** la couche de protection contre l'usure (5) est fabriquée à partir d'un matériau SiC comprenant au moins un liant oxydique ou métallique.

5. Disque de frein (1) selon l'une quelconque des revendications 1 à 3, **caractérisé en ce que** la couche de protection contre l'usure (5) est fabriquée à partir d'un alliage à base de fer à renforcement de carbure de vanadium ou à renforcement de carbure de niobium ou à renforcement de carbure de bore ou à renforcement de carbure de chrome.

6. Procédé de fabrication d'un disque de frein (1) pour un frein de roue d'un véhicule terrestre, dans lequel un corps de base (2) est fabriqué de fonte grise avec au moins un côté friction axial (3), au moins une couche de protection anticorrosion (4) appliquée sur le côté friction axial (3), et au moins une couche de protection contre l'usure (5) appliquée sur la couche de protection anticorrosion (4),
**caractérisé en ce que** la couche de protection anticorrosion (4) est fabriquée en utilisant un procédé de shérardisation.

7. Procédé de fabrication d'un disque de frein (1) pour un frein de roue d'un véhicule terrestre, dans lequel un corps de base (2) est fabriqué de fonte grise avec au moins un côté friction axial (3), au moins une couche de protection anticorrosion (4) appliquée sur le côté friction axial (3), et au moins une couche de protection contre l'usure (5) appliquée sur la couche de protection anticorrosion (4),
**caractérisé en ce que** la couche de protection anticorrosion (4) est fabriquée en appliquant un revêtement sur le côté friction axial (3) avec un matériau à base de poudre d'aluminium.

8. Procédé selon la revendication 6 ou 7, **caractérisé en ce que** le côté friction axial (3) est soumis à un tournage par enlèvement de copeaux avant l'application de la couche de protection anticorrosion (4).

9. Procédé selon la revendication 6 ou 7, **caractérisé en ce que** le côté friction axial (3) est rendu rugueux par l'utilisation d'un procédé à jet d'eau haute pression avant l'application de la couche de protection anticorrosion (4).

10. Procédé selon la revendication 9, **caractérisé en ce que** lors du procédé à jet d'eau haute pression, un jet d'eau haute pression est dirigé sur le côté friction axial (3), et en même temps, des vibrations ultrasonores sont générées dans le jet d'eau haute pression.

11. Procédé selon l'une quelconque des revendications 6 à 10, **caractérisé en ce que** la couche de protection contre l'usure (5) est appliquée sur la couche de protection anticorrosion (4) en utilisant un procédé de projection à la flamme haute vélocité.

12. Procédé selon l'une quelconque des revendications 6 à 11, **caractérisé en ce qu'**une surface, détournée de la couche de protection anticorrosion (4), de la couche de protection contre l'usure (5) est lissée.

13. Procédé selon l'une quelconque des revendications 6 à 12, **caractérisé en ce que** lors de la projection à la flamme haute vélocité de couches de protection contre l'usure, un brûleur HVOF fonctionnant au combustible liquide et doté de quatre injecteurs de poudre est mis en œuvre.
